# EUROPÄISCHE PATENTSCHRIFT

(11) **EP 0 579 000 B1**
(45) Veröffentlichungstag und Bekanntmachung des Hinweises auf die Patenterteilung: **21.01.1998**
(21) Anmeldenummer: 93109958.4
(22) Anmeldetag: 22.06.1993
(51) Int. Cl.: B32B 5/12, B32B 3/12, B32B 17/02, B32B 27/42, E04C 2/24, E04C 2/36

(54) **Leichtbauplattenstruktur für Bodenpaneele**
Lightweight building elements for floor panels
Eléments de construction légers pour panneaux de sol

(30) Priorität: 15.07.1992 LU 88149
(43) Veröffentlichungstag der Anmeldung: 19.01.1994
(73) Patentinhaber: EURO-COMPOSITES S.A., L-6401 Echternach (LU)
(72) Erfinder: Weinand, Guy, Dr., L-6550 Berdorf (LU)
(74) Vertreter: Bohnenberger, Johannes, Dr.

(56) Entgegenhaltungen:
- EP-A- 0 047 229
- EP-A- 0 075 033
- WO-A-85/03032
- AT-B- 384 189
- US-A- 4 353 947
- US-A- 4 680 216

## Beschreibung

Die Erfindung betrifft eine Leichtbauplattenstruktur, wie sie zum Beispiel für Fußbodenpaneele im Flugzeugbau verwendet wird, bestehend aus einer Wabenkernplatte auf welcher beidseitig je zwei Faserverbundwerkstoffe befestigt sind.

Leichtbauplattenstrukturen, bestehend aus Glas-, Kohlenstoff- und Aramidfasern in verschiedenen warm ausgehärteten Kunstharzmatrixen, welche auf einer Wabenkernplatte befestigt sind, werden mehr und mehr in dem Luft- und Raumfahrt-, Automobil-, Marine- und Machinenbausektor eingesetzt. Diese Leichtbauplattenstrukturen haben trotz ihres geringen spezifischen Gewichtes hervorragende mechanische, elektrische und thermische Eigenschaften.

Die bekannten, marktgängigen Plattenstrukturen weisen jedoch einen wesentlichen Nachteil auf insbesonders wenn Kohlenstoff-Fasern verwendet werden, der darin besteht, daß die Inkompatibilität zwischen den Fasern und der Matrix zu fehlerhaften Grenzflächen führen kann. Das Problem ensteht dadurch, daß die Verstärkungsfasern, im Vergleich zu der Matrix, sehr spröde sind, und daß dadurch die Adhäsion mit z.B. der Wabe reißt und dabei auf Dauer Mikroriße entstehen können. Außerdem können Kohlenstoff-Fasern eine galvanische Korrosion auslösen die die Verbindung zwischen Fasern und Matrix im Laufe der Zeit schwächen.

Glasfasern, insbesondere gewebtes E-Glas, weisen eine niedrige Dauerfestigkeit auf.

Aramidfasern sind auch nur beschränkt einsetzbar wegen ihrer schlechten Druckfestigkeit. Diese Fasern können eine hohe Durchbiegung unter Belastung nicht verhindern, welches sich nachteilig auswirkt bei der Verwendung der Platten im Fußbodenbereich von Flugzeugen. Die Wahl der Wabenkernplatte dabei wird jedoch oft ungenügend berücksichtigt, besonders wenn nicht-metallische Waben zur Anwendung kommen. Falls ausgewogene mechanische Eigenschaften erzielt werden sollen ohne die Dichte und/oder die Dicke des Wabenkerns zu ändern, ist es von großer Wichtigkeit, daß das Verhältnis Fasern zu Harz in der Wabe optimal ist. Falls der Fasergehalt sehr hoch ist (75% und mehr) ist die Druckfestigkeit normalerweise niedrig, dagegen sind die Schubeigenschaften hoch. Ein hoher Harzgehalt (60 % und mehr) bewirkt jedoch, daß die Wabe sehr brüchig und das dynamische Dauerverhalten sowohl als auch die Schlagzähigkeit sehr gemindert werden.

Diese Nachteile, bedingt durch diese beiden Extreme, führen häufig dazu, daß die Leichtbauplattenstrukturen überdimensioniert werden, weil sie ihre theoretische Stärke bzw. Haltbarkeit nicht erreichen. Dadurch vergrößern sich die Kosten und das Gewicht das bei der Anwendung im Flugzeugbau jedoch eine wichtige Rolle spielen.

Außerdem haben viele Leichtbauplattenstrukturen den Nachteil, daß sie, wie die organischen Stoffe im allgemeinen, brennbar und leicht entzündlich sind.

Im Flugzeugbau haben die Behörden zu Recht gefordert, daß diese negativen Eigenschaften gemindert werden, besonders für Anwendungen im Flugzeuginnenbereich. Auch sollte so wenig Rauch wie möglich bei einer Verbrennung erzeugt werden, wenigstens eine bestimmte Zeit lang, so daß die Bergung von gefährdeten Personen nicht behindert wird; der entstehende Rauch sollte desweiteren nicht giftiger als Kohlenmonoxyd sein. Diese Forderungen sind international festgelegt z.B. in der ATS 1000.001 welche die feuerhemmenden Qualitäten, die Rauchdichte und die Giftigkeit des entstehenden Rauches vorschreibt für Werkstoffe die im Flugzeuginnenbereich verwendet werden.

Um zu verhindern, daß die Polymermatrix nach deren Entzündung weiterbrennt, hat man versucht Additive oder chemische Modifizierer wie z.B. Brom und Antimon (Synergiewirkung) zuzusetzen. Es gibt jedoch eine andere Klasse von synthetischen Harzen, die Phenolharze, welche bessere flammhemmende Eigenschaften aufweisen als die für die Herstellung von Leichtbauplattenstrukturen gebräuchlichen Epoxidharze. Bei Phenolharzen ist es einfach sie selbstlöschend zu machen ; sie entwickeln außerdem unter Beflammung eine geringe Rauchdichte, da sie eher verkohlen als sich unter starker Rauchentwicklung zu zersetzen. Leider sind die ausgehärteten Phenolharze brüchig und haben eine gerine Dauerfestigkeit. Die Schälfestigkeit zwischen Decklage und Wabenkern ist ebenfalls gering. Deshalb sind Phenolharze ungeeignet für hochbelastete, tragende Strukturen wie z.B. Fußbodenpaneele.

In neuzeitlichen Passagiertransportsystemen werden stetig größerer Komfort und höhere Geschwindigkeiten mit niedrigerem Energieverbrauch und größerer Sicherheit für die Passagiere angestrebt.

Der Erfindung liegt die Aufgabe zu Grunde, eine Leichtbauplattenstruktur für zum Beispiel Fußbodenpaneele in Flugzeugen zu schaffen, welche eine höhere Dauerfestigkeit, eine höhere Schlagzähigkeit, eine höhere Schubfestigkeit und gleichzeitig eine geringere Durchbiegung unter höchster Last aufweist ohne jedoch das Flächengewicht oder die Dicke der Leichtbauplattenstruktur wesentlich zu erhöhen.

Diese Aufgabe wird erfindungsgemäß gelöst durch eine Leichtbauplattenstruktur für Bodenpaneele, welche aus einer Kernplatte, beispielsweise eine Aramidwabenstrukturplatte, besteht, auf der beidseitig je zwei Faserverbundwerkstoffschichten befestigt sind, die dadurch gekennzeichnet ist, daß die jeweils äußere Schicht aus einem E-Glasgewebe und einer Schicht Kohlenstoff-Fasern von hoher Festigkeit besteht, die beide in Phenolharz eingebettet sind, daß die jeweils innere Schicht aus in Epoxidharz eingebetteten R-Glasfasern besteht, wobei die Kohlenstoff-Faserschicht und die R-Glasfaserschicht aus unidirektionalen Fasern bestehen welche diagonal 0°/90° verlaufen, und daß das Phenolharz ungefähr die gleichen Gelierungstemperatur, Aushärtungszeit und Aushärtungstemperatur wie das Epoxidharz aufweist, und somit zusammen mit dem Epoxidharz aushärtbar ist.

Wie erwähnt müßen die beiden Harzsysteme, Phenolharz und Epoxidharz, ungefähr die gleichen Gellierungszeiten, ungefähr die gleichen Aushärtungszeiten und ungefähr die gleichen Aushärtungstemperaturen aufweisen. Die abgestimmten Gelierungszeiten verhindern, daß das Phenolharz zum Epoxidharz diffundiert und umgekehrt. Somit wird eine selbstständige dennoch gleichzeitige Aushärtung der beiden Harzsysteme gewährleistet. Phenolharze mit einer Gelierungstemperaturen von 100°C bis 120°C, mit einer Aushärtungszeit von 60 bis 120 min. und mit einer Aushärtungstemperaturen von 120°C bis 155°C können zusammen mit Epoxidharzen welche eine Gelierungstemperatur von 80°C bis 100°C, eine Aushärtungszeit von 60 bis 120 min. und eine Aushärtungstemperatur von 120°C bis 155°C aufweisen, verwendet werden.

Die Aramidwabe die als Kernplatte verwendet wird, ist wegen ihres Aufbaus je nach Richtung unterschiedlich belastbar. Die Schubfestigkeit ist am größten in der Bahnrichtung des Aramidpapiers aus dem die Wabe besteht d.h. in L-Richtung. Die Schubfestigkeit, quer zu der Bahnrichtung des Aramidpapiers, d.h. in W-Richtung, ist ungefähr 1,5 bis 2 mal niedriger als in L-Richtung.

Gemäß einer ersten bevorzugten Ausführung werden die R-Glasfasern parallel zu der L-Richtung der Wabe verlegt, um so eine Leichtbauplattenstruktur herzustellen, welche eine optimale Schubfestigkeit aufweist. In der äußeren Schicht verlaufen die Kohlenstoff-Fasern parallel zu der W-Richtung der Wabe.

Da die Standardgröße der Waben in L-Richtung nur zwischen 1120 mm und 1220 mm, in W-Richtung jedoch 2440 mm beträgt, kann es für manche Anwendungen vorteilhaft sein, die Schubfestigkeit der Wabe in W-Richtung zu verstärken.

Gemäß einer weiteren bevorzugten Ausführung werden daher die R-Glasfasern parallel zu der W-Richtung, und die Kohlenstoff-Fasern parallel zu der L-Richtung verlegt.

Gemäß einer anderen Ausführungsform besteht die Kernplatte aus einer Aramidwabenstruktur, welche eine Zellenweite von 3,2 bis 6,4 mm, eine spezifische Dichte von 50 bis 144 kg/m³ und ein Verhältnis Fasern/Kunstharz von 83/17 bis 37/63 aufweist.

Wegen ihrem speziellen Aufbau erfüllen diese Leichtbauplattenstrukturen die international geltenden Sicherheitsbestimmungen im Brandfall : ATS 1000.001.

Die einzelnen Bauelemente der Leichtbauplattenstruktur haben folgende Aufgaben, die sie vorteilhaft erfüllen.

Das E-Glasgewebe auf der Oberfläche jeder Seite hat hauptsächlich vier Funktionen : 1) während des Aufbaus der Leichtbauplattenstrukturen erleichtert es die Handhabung der Faserverbundwerkstoffe, 2) das fertige Paneel ist einfacher maschinell zu bearbeiten, 3) ein Delaminieren von Fasern während des Sägens wird verhindert und 4) die galvanische Korrosion während der Lebenszeit der Leichtbauplattenstruktur als Bodenpaneel in Flugzeugen wird verhindert.

Die in Phenolharz getränkte Kohlenstoff-Faserschicht dient dazu, eine minimale Durchbiegung des Paneels unter hoher Belastung zu gewährleisten, ohne jedoch das Gewicht des Paneels zu erhöhen und die Epoxidharzschicht zu bedecken. Dadurch erfüllt das Paneel die international geltenden Sicherheitsbestimmungen im Brandfall: ATS 1000.001.

Die R-Glasfasern, zusammen mit dem richtiggewählten Haftvermittler, ermöglichen es dem Epoxidharz sich während der Aushärtung chemisch mit den Fasern zu verbinden. Auf diese Weise ensteht eine quasi-perfekte Grenzfläche zwischen den Fasern und der Matrix.

Die Schubspannungen, denen das Bodenpaneel ausgesetzt ist, enstehen größtenteils in Flugrichtung des Flugzeuges. Man kann also die Leichtbaustrukturplatten in L-Richtung verlegen, wobei die R-Glasfasern parallel zur Flugrichtung verlaufen müssen. Die Flugzeugbauer verlangen jedoch des öfteren, daß die W-Richtung der Leichtbaustrukturpaneele mit der Flugrichtung übereinstimmt. Dies erlaubt den Flugzeugbauern, wegen den Dimensionnen der Paneele, den Fußboden optimaler auszulegen. Die Paneele müssen weniger oft geschnitten/verklebt werden und außerdem ensteht weniger Abfall.

Unabhängung davon, ob das Paneel in L-Richtung oder in W-Richtung liegt, müssen die R-Glasfasern immer parallel zur Flugrichtung verlaufen. Da die R-Glasfasern weniger brüchig als die Kohlenstoff-Fasern sind, welche quer zur Flugrichtung liegen, und da die R-Glasfasern in Epoxidharz eingebettet sind, welches weniger brüchig als Phenolharz ist, kann diese Verbindung zwischen der R-Glasfasern/Epoxidharzschicht sowie Decklage, Wabenkern optimal belastet werden ohne daß Mikroriße entstehen während der Benutzung der Bodenpaneele.

Diese Tatsache, in Verbindung mit einer präzisen Aushärtungsreaktion der Epoxidharzschicht und der Phenolharzschicht, stellt sicher daß keine Delaminierung, weder zwischen den verschiedenen Schichten noch zwischen der Kernplatte und den Schichten, stattfindet. Dies hat zur Folge, daß das in dieser Weise hergestellte Paneel eine höhere Dauerfestigkeit, eine höhere Schlagzähigkeit, eine höhere Schubfestigkeit und gleichzeitig eine geringere Durchbiegung unter höchster Last aufweist ohne jedoch das Flächengewicht oder die Dicke der Leichtbauplattenstruktur wesentlich zu erhöhen.

Die Erfindung wird anhand von den folgenden Zeichnungen näher erläutert. Darin zeigen:
Figur 1: Eine Gesamtsicht in perspektivischer Darstellung einer Wabenstruktur mit hexagonalen Zellen;
Figur 2: Ein Querschnitt in T-Richtung durch eine erfindungsgemäße Leichtbauplattenstruktur;

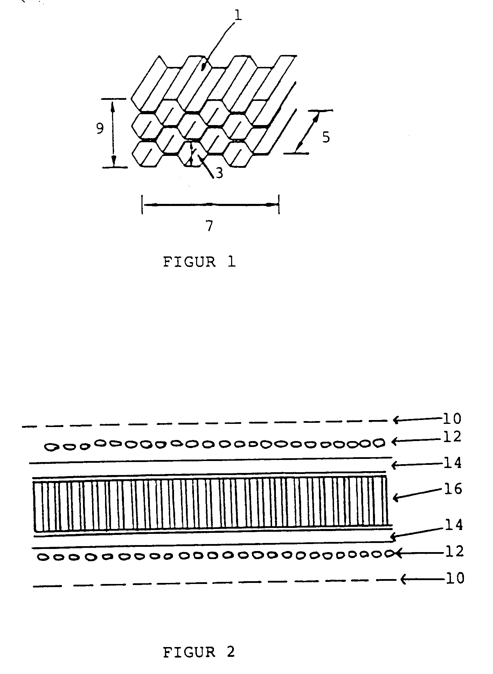

Bei der in der Figur 1 dargestellten Gesamtansicht einer Wabenstruktur 1 mit hexagonalen Zellen sind die T-Richtung (Dicke) mit 5, die L-Richtung mit 7, die W-Richtung mit 9 sowie die Zellenweite mit 3 bezeichnet.

Aus dem Querschnitt in T-Richtung der Figur 2 geht der Aufbau der erfindungsgemäßen Leichtbauplattenstruktur hervor.

Die Kernplatte 16 ist beidseitig mit je einem E-Glasgewebe 10 und einer Kohlenstoff-Faserschicht 12, welche beide in Phenolharz eingebettet sind, bedeckt. Zwischen der Kohlenstoff-Faserschicht 12 und der Kernplatte 16 verläuft die in Epoxidharz getränkte R-Glasfaserschicht 14.

Eine erfindungsgemäße Leichtbaustrukturplatte wurde wie folgt hergestellt (Tabelle 1) und Tests unterzogen deren Ergebnisse in der Tabelle 2 zusammengefaßt sind.

Eine Aramidwabe vom Typ ECA 3.2-96 wie sie von der Anmelderin hergestellt und vertrieben wird, wurde als Kernplatte benutzt. Die aus hexagonalen Zellen, von einer durchschnittlichen Weite von 3,2 mm, bestehende Wabe hat eine nominale Dichte (Raumgewicht) von 96 kg/m³.

Auf diese Kernplatte wurden beidseitig je zwei Faserverbundwerkstoffschichten, welche aus faserverstärkten Kunstharzen bestehen, aufgetragen. In dem vorliegenden Fall wurden zwei verschiedene Faserverbundwerkstofftypen benutzt:
a) Der äußere Faserverbundwerkstoff besteht aus einem E-Glasgewebe (± 25 g/m²) und unidirektionalen Kohlenstoff-Fasern (± 190 g/m²), in diesem Beispiel in L-Richtung liegend, welche beide in Phenolharz eingebettet sind.
b) Der innere Faserverbundwerkstoff besteht aus einem in Epoxidharz unidirektionalem R-Glasgelege (± 260 g/m²) eingebetteten, welches in diesem Beispiel in W-Richtung verlegt wurde.

Die verwendeten R-Glasfasern weisen ein Elastizitätsmodul von 86'000 MPa, eine maximale Zugfestigkeit von 4'400 MPa und eine relative Dichte von 2,55 g/cm³. Die Kohlenstoff-Fasern weisen eine Zugfestigkeit von 3'792 MPa, ein Elastizitätsmodul von 234'000 MPa und eine relative Dichte von 1,78 g/cm³ auf. Die Gelierungstemperaturen, Härtungstemperaturen und Härtungszeiten der Harzsysteme sind in der Tabelle 1 aufgeführt.

**Tabelle 1**

| | Gelierungstemperatur (°C) | Härtungs Temperatur (°C) | Zeit (min.) |
|---|---|---|---|
| Phenolharz | 120 | 135 | 90 |
| Epoxidharz | 90 | 135 | 90 |

Das so entstandene Paneel wurde ausführlich getestet und mit einem Standardfußbodenpaneel verglichen. Die Resultate der beiden Testserien sind in der Tabelle 2 aufgeführt.

**Tabelle 2**

| | STANDARD PANEEL | ERFINDUNGSGEMAßE PANEELE |
|---|---|---|
| Dicke des Paneels (mm) | 9.35-9.65 | 9.35-9.65 |
| Flächengewicht (kg/m²) | 2.950-3.150 | 2.450-2.650 |
| Trommelschälkraft in W-Richtung (N/76 mm) | 350-390 | 330-360 |
| 4-Punkt Biegekraft in L-Richtung (N) | 1450-1650 | 2000-2300 |
| Durchbiegung bei 446 N in L-Richtung (mm) | 7-8 | 4-5 |
| 3-Punkt Schubkraft in W-Richtung (N) | 1900-2100 | 2500-2800 |
| ATS 1000.001 | nicht bestanden | bestanden |
| Dauerfestigkeit (Belastungszyklen) | 850 | 2450 |

Aus der Tabelle 2 werden die verbesserten Eigenschaften des erfindungsgemäßen Fußbodenpaneels sichtbar.

Das erfindungsgemäße Paneel, im Vergleich zu dem Standardpaneel, weist eine Verringerung der Durchbiegung unter Belastung auf 50% bis 70% auf, trotz ein um 500 g/m² geringeres Flächengewicht bei gleicher Dicke.

Trotz bedeutend geringerem Harzgehalt im erfindungsgemäßen Paneel, und trotz der Tatsache, daß das Schälen parallel zu der Faserrichtung der inneren Faserverbundwerkstoffschicht, d.h. in W-Richtung der Wabe, erfolgte, ist die Verringerung der Schälkraft zwischen der Kernplatte und der Decklage bedeutungslos.

Wegen der besseren Wahl von Fasern, unidirektionale Kohlenstoff-Fasern verglichen mit gewebtem E-Glas, wurde das 4-Punkt Biegekraftverhalten um 30% bis 40% verbessert.

Das 3-Punkt Schubkraftverhalten in W-Richtung konnte um 30 bis 35% verbessert werden, wegen des besseren Verhältnisses Faser/Harz in der Wabe der Kernplatte.

Desweiteren werden ebenfalls die ATS 1000.001 Vorschriften, welche die selbstverlöschenden Eigenschaften, die Rauchdichte und die Toxizität des enstehenden Rauches festlegt, dank des speziellen Aufbaus (Phenolmatrix außen, Epoxidmatrix innen) erfüllt. Das Standardpaneel, das diesen Aufbau nicht vorweist, erfüllt die ATS 1000.001 nicht.

Wegen des symetrischen Aufbaus der erfindungsgemäßen Leichtbauplattenstruktur treten während der Herstellung weniger Probleme durch Wölbungen der Paneele auf.

Um die Lebenserwartung eines Paneels im Labor simulieren zu können, wurde ein Verfahren entwickelt, bei dem folgende Annahmen zugrundegelegt wurden.

Angenommen das Flugzeug führt pro Jahr 851 Flüge durch, ist mit 210 Passagieren im Durchschnitt besetzt, hat zwei Gänge d.h. 105 Passagiere pro Gang. Daraus ergibt sich eine Lastwechselzahl pro Jahr :
- Ein- und Aussteigen der Passagiere :
   105 x 2 x 851 = 178'710 Lastwechsel (LW)
- Benutzen der Toiletten plus Füßevertreten :
   1,5 x pro Passagier x 105 Passagiere x 851 Flüge = 134'032 LW
- Belastung durch Bordpersonal, 4 Personen je 16 mal :
   4 Personen x 16 x 851 Flüge = 54'464 LW
- Belastung durch Servicewagen :
   4 Rollen x 8 x 851 Flüge = 27'232 LW

Daraus ergibt sich eine Lastwechselzahl für den Gangbereich von 394'438 LW pro Jahr oder 462 LW pro Flug was einem Belastungszyklus entspricht.

Für ein in Europa und Nordamerika operierendes Flugzeug sind die Lastwechsel, wie in der Tabelle 3 beschrieben, nach Gewicht verteilt. Diese Gewichte enthalten einen dynamischen Anteil von 15% für Laufen, Springen, Tanzen im Fluge.

**Tabelle 3**

| | | |
|---|---|---|
| 60 kg | 2,5 % | 11 LW |
| 70 kg | 5,0 % | 23 LW |
| 80 kg | 15,0 % | 70 LW |
| 100 kg | 25,0 % | 116 LW |
| 110 kg | 35,0 % | 162 LW |
| 120 kg | 10,0 % | 46 LW |
| 130 kg | 5,0 % | 23 LW |
| 145 kg | 2,5 % | 11 LW |
| | **Total 100 %** | **462 LW** |

Man kann also für jedes Fußbodenpaneel eine individuelle reproduzierbare Wöhler-Kurve aufstellen und so unter Hinzuziehung des entsprechenden Belastungszyklus eine Lebensdauer für jedes Fußbodenpaneel bestimmen.

Die bleibende Verformung der Paneele darf 1 mm jedoch nicht übersteigen.

Aus der Tabelle 2 ersieht man, daß die Standardpaneele nur eine Dauerfestigkeit von 850 Belastungszyklen aufzeigen, d.h. eine Lebensdauer von ungefähr 1 Jahr im Flugbetrieb haben.

Das erfindungsgemäße Paneel, trotz seines geringeren Gewichtes, hält dagegen 2.450 Belastungszyklen stand, d.h. die Lebendauer beträgt im Flugbetrieb ungefähr 2,9 Jahre.

Bei diesem Versuch wurde ein Paneel getestet das viel leichter ist, die Gewichtsersparniss bei einem Flugzeug von 228 m² Fußbodenfläche beträgt also zwischen höchstens (3,150 kg/m² - 2,450 kg/m²) x 228 m² = 159,6 kg und (2,950 kg/m² - 2,650 kg/m²) x 228 m² = 68.4 kg mindestens.

Der Fachmann kann sofort erkennen, daß man die Lebensdauer des erfindungsgemäßen Fußbodenpaneels noch drastisch erhöhen kann, wenn man auf die Gewichtsersparnis, im Vergleich zum Standardpaneel, verzichtet. Die mechanischen Eigenschaften des erfindungsgemäßen Paneels lassen sich einfach dadurch verbessern, daß eine Kernwabe mit höherem Raumgewicht verwendet wird.

## Patentansprüche

1. Leichtbauplattenstruktur für Bodenpaneele welche aus einer Kernplatte (16), beispielsweise eine Aramidwabenstrukturplatte, besteht, auf der beidseitig je zwei Faserverbundwerkstoffschichten befestigt sind, dadurch gekennzeichnet, daß die jeweils äußere Schicht aus einem E-Glasgewebe (10) und einer Schicht Kohlenstoff-Fasern (12) von hoher Festigkeit besteht, die beide in Phenolharz eingebettet sind, daß die jeweils innere Schicht aus in Epoxidharz eingebetteten R-Glasfasern (14) besteht, wobei die Kohlenstoff-Faserschicht (12) und die R-Glasfaserschicht (14) aus unidirektionalen Fasern bestehen welche diagonal 0°/90° verlaufen und dass das Phenolharz ungefähr die gleichen Gelierungstemperatur, Aushärtungszeit und Aushärtungstemperatur wie das Epoxidharz aufweist, und somit zusammen mit dem Epoxidharz aushärtbar ist.

2. Leichtbauplattenstruktur nach Anspruch 1, dadurch gekennzeichnet daß die R-Glasfasern (14) parallel zu der W-Richtung (9) der Kernplatte (16) und die Kohlenstoff-Fasern (12) parallel zu der L-Richtung (7) verlaufen.

3. Leichtbauplattenstruktur nach Anspruch 1, dadurch gekennzeichnet daß die R-Glasfasern (14) parallel zu der L-Richtung (7) der Kernplatte (16) und die Kohlenstoff-Fasern (12) parallel zu der W-Richtung (9) verlaufen.

4. Leichtbauplattenstruktur nach Anspruch 1 dadurch gekennzeichnet daß die Kernplatte (16) aus einer Aramidwabenstruktur besteht welche eine Zellenweite (3) von 3,2 bis 6,4 mm, eine spezifische Dichte von 50 bis 144 g/cm³ und ein Verhältnis Fasern/Kunstharz von 83/17 bis 37/63 aufweist.

5. Leichtbauplattenstruktur nach Anspruch 1 dadurch gekennzeichnet daß ein Phenolharz welches eine Gelierungstemperatur von 100 °C bis 120 °C, eine Härtungstemperatur von 120 °C bis 155 °C und eine Härtungszeit von 60 bis 120 min. aufweist, und ein Epoxidharz welches eine Gelierungstemperatur von 80 °C bis 100 °C, eine Aushärtungstemperatur von 120 °C bis 155 °C und eine Aushärtungszeit von 60 bis 120 min aufweist, verwendet wird.

6. Leichtbauplattenstruktur nach Ansprüchen 1 bis 5, daß die R-Glasfasern (14) , eine maximale Zugfestigkeit von 4'400 MPa, ein Elastizitätsmodul von 86'000 MPa und eine relative Dichte von 2,55 g/cm³, und daß die Kohlenstoff-Fasern (12) eine maximale Zugfestigekeit von 3'792 MPa, ein Elastizitätsmodul von 234'000 MPa und eine relative Dichte von 1,78 g/cm³ haben.

7. Leichtbauplattenstruktur nach Anspruch 1, 2, 4, 5, und 6 dadurch gekennzeichnet daß die Dicke zwischen 9,35 und 9,65 mm; das Flächengewicht zwischen 2,450 und 2,650 kg/m²; die Trommelschälkraft in W-Richtung zwischen 330 und 360 N/76 mm; die 4-Punkt Biegekraft in L-Richtung zwischen 2000 und 2300 N; die Durchbiegung in L-Richtung bei 446 N zwischen 4 und 5 mm; die 3-Punkt Schubkraft in W-Richtung zwischen 2500 und 2800 N beträgt und eine Dauerfestigkeit von mindestens 2400 Belastungszyklen aufweist.

## Claims

1. Lightweight board structure for floor panels, which comprises a core board (16), for example a board with an aramid honycomb structure, on both sides of which two respective fibre composite layers are attached, characterised in that the respective outer layer comprises an E-glass fabric (10) and a layer (12) of high-strength carbon fibres, which are both embedded in phenolic resin, in that the respective inner layer (14) comprises R-glass fibres embedded in epoxy resin, the carbon fibre layer (12) and the R-glass fibre layer (14) comprising unidirectional fibres which run diagonally 0°/90° and in that the phenolic resin has approximately the same gelling temperature, curing time and curing temperature as the epoxy resin, and thus is curable together with the epoxy resin.

2. Lightweight board structure according to Claim 1, characterised in that the R-glass fibres (14) run parallel to the W direction (9) of the core board (16) and the carbon fibres (12) run parallel to the L direction (7).

3. Lightweight board structure according to Claim 1, characterised in that the R-glass fibres (14) run parallel to the L direction (7) of the core board (16) and the carbon fibres (12) run parallel to the W direction (9).

4. Lightweight board structure according to Claim 1, characterised in that the core board (16) comprises an aramid honeycomb structure having a cell width (3) of 3.2 to 6.4 mm, a relative density of 50 to 144 g/cm³ and a fibre/synthetic resin ratio of 83/17 to 37/63.

5. Lightweight board structure according to Claim 1, characterised in that a phenolic resin having a gelling temperature of 100°C to 120°C, a curing temperature of 120°C to 155°C and a curing time of 60 to 120 min. is used, and an epoxy resin having a gelling temperature of 80°C to 100°C, a curing temperature of 120°C to 155°C and a curing time of 60 to 120 min. is used.

6. Lightweight board structure according to Claims 1 to 5, characterised in that the R-glass fibres (14) have a maximum tensile strength of 4,400 MPa, a modulus of elasticity of 86,000 MPa and a relative density of 2.55 g/cm³, and in that the carbon fibres (12) have a maximum tensile strength of 3,792 MPa, a modulus of elasticity of 234,000 MPa and a relative density of 1.78 g/cm³.

7. Lightweight board structure according to Claims 1, 2, 4, 5 and 6, characterised in that the thickness is between 9.35 and 9.65 mm; the weight per unit area is between 2.450 and 2.650 kg/m²; the drum peel strength in the W direction is between 330 and 360 N/76 mm; the 4-point flexural strength in the L direction is between 2000 and 2300 N; the deflection in the L direction at 446 N is between 4 and 5 mm; the 3-point shear strength in the W direction is between 2500 and 2800 N and the structure has a fatique strength of at least 2400 stress cycles.

## Revendications

1. Structure en plaque de construction légère pour panneaux de sols comprenant une plaque de base (16), par exemple une plaque de structure en nid d'abeille, sur les deux côtés de laquelle sont fixés respectivement des couches de plastique renforcé de fibres, caractérisée en ce que respectivement les couches externes consistent en un tissu de verre de type E (10) et une couche de fibres de carbone (12) de haute résistance qui sont toutes deux noyées dans une résine phénolique, en ce que respectivement les couches internes consistent en des fibres de verre de type R (14) noyées dans une résine époxy, structure dans laquelle la couche de fibres de carbone (12) et la couche de fibres de verre de type R (14) consistent en des fibres unidirectionnelles qui s'étendent diagonalement 0°/90°, et en ce que la résine phénolique présente approximativement les mêmes température de gélification, temps de durcissement et température de durcissement que la résine époxy, et peut ainsi être durcie avec la résine époxy.

2. Structure en plaque de construction légère selon la revendication 1, caractérisée en ce que les fibres de verre de type R (14) s'étendent parallèlement à la direction W (9) de la plaque de base (16) et que les fibres de carbone (12) s'étendent parallèlement à la direction L (7).

3. Structure en plaque de construction légère selon la revendication 1, caractérisée en ce que les fibres de verre de type R (14) s'étendent parallèlement à la direction L (7) de la plaque de base (16) et que les fibres de carbone (12) s'étendent parallèlement à la direction W (9).

4. Structure en plaque de construction légère selon la revendication 1, caractérisée en ce que la plaque de base (16) consiste en une structure en nid d'abeille en aramide présentant une largeur de cellules (3) comprise entre 3,2 mm et 6,4 mm, une densité spécifque comprise entre 50 g/cm3 et 144 g/cm3 et un rapport fibres/résine compris entre 83/17 et 37/63.

5. Structure en plaque de construction légère selon la revendication 1, caractérisée en ce que l'on utilise une résine phénolique qui présente une température de gélification comprise entre 100°C et 120°C, une température de durcissement comprise entre 120°C et 155°C et un temps de durcissement compris entre 60 mn et 120 mn ; et une résine époxy qui présente une température de gélification comprise entre 80°C et 100°C, une température de durcissement comprise entre 120°C et 155°C et un temps de durcissement compris entre 60 mn et 120 mn.

6. Structure en plaque de construction légère selon les revendications 1 à 5, caractérisée en ce que les fibres de verre de type R (14) présentent une résistance à la traction maximale de 4'400 MPa, un module d'élasticité de 86'000 MPa et une densité relative de 2,55 g/cm3, et en ce que les fibres de carbone (12) présentent une résistance à la traction maximale de 3'792 MPa, un module d'élasticité de 234'000 MPa et une densité relative de 1,78 g/cm3.

7. Structure en plaque de construction légère selon les revendications 1, 2, 4, 5 et 6, caractérisée en ce qu'elle présente une épaisseur comprise entre 9,35 mm et 9,65 mm, un poids surfacique compris entre 2,450 kg/m2 et 2,650 kg/m2, une force de pelage roulant dans la direction W comprise entre 330 et 360 N/76 mm, une force de flexion en 4 points dans la direction L comprise entre 2000 et 2300 N, une flexion transversale dans la direction L sous 446 N comprise entre 4 et 5 mm, une force de poussée en 3 points dans la direction W comprise entre 2500 N et 2800 N, et une résistance dans la durée d'au moins 2400 cycles de charge.
